(19) Europäisches Patentamt

European Patent Office

Office européen des brevets

(11) EP 1 477 374 A1

(12) EUROPEAN PATENT APPLICATION
published in accordance with Art. 158(3) EPC

(43) Date of publication:
17.11.2004 Bulletin 2004/47

(51) Int Cl.7: B60R 21/26

(21) Application number: 03703158.0

(22) Date of filing: 04.02.2003

(86) International application number:
PCT/JP2003/001122

(87) International publication number:
WO 2003/068568 (21.08.2003 Gazette 2003/34)

(84) Designated Contracting States:
AT BE BG CH CY CZ DE DK EE ES FI FR GB GR
HU IE IT LI LU MC NL PT SE SI SK TR

(30) Priority: 18.02.2002 JP 2002039725

(71) Applicant: Daicel Chemical Industries, Ltd.
Sakai-shi, Osaka 590-8501 (JP)

(72) Inventors:
• YAMAZAKI, Masayuki
Himeji-shi, Hyogo 671-1262 (JP)
• RYOBO, Eiichi
Himeji-shi, Hyogo 671-1114 (JP)

(74) Representative: Grünecker, Kinkeldey,
Stockmair & Schwanhäusser Anwaltssozietät
Maximilianstrasse 58
80538 München (DE)

(54) **HYBRID INFLATOR**

(57) The present invention provides a hybrid inflator in which excellent operation performance can be obtained.

The present invention provides a hybrid inflator for an inflatable safety system of a vehicle provided with an air bag, comprising an inflator housing, two gas generating chambers which is accommodated in the inflator housing and provided with a gas generating agent, and two ignition means chambers provided with ignition means which are connected to the two gas generating chambers, wherein liquefied $CO_2$ is charged in the sealed space, which is the remaining space excluding the gas generating chamber and the ignition means accommodating chamber inside the inflator housing, the number of moles of the liquefied $CO_2$/the number of moles of the non-azide gas generating agent is 0.2 to 5, a charged amount of the liquefied $CO_2$ is 0.6 to 3 moles, and a charged amount of the non-azide gas generating agent is 0.6 to 3 moles.

Fig. 1

**Description**

Technical Field to which the Invention belongs

The present invention relates to a hybrid inflator which can inflate an air bag unfailingly and rapidly and that is reduced in size and weight, and an air bag system using the same.

Background Art

According to development of an inflator for an inflatable safety system for an automobile, a hybrid inflator which uses a pressurized gas and a solid gas generating agent in combination is attracting attentions. In the hybrid inflator, an essential requirement is to inflate an air bag by a predetermined amount within a predetermined period in order to make the air bag action effectively, but reduction in size and weight of the hybrid inflator is demanded strongly in order to come through a demand for weight-reduction of the entire vehicle. In order to come through the demand for reduction in size and weight of the hybrid inflator, modification of a structure of the hybrid inflator itself and modification of inflating means for an air bag can be employed, but it is important that an operation performance of the hybrid inflator is not deteriorated even though size and weight are reduced by such a modification.
In WO-A 01/56954 which is a relating background art, a hybrid inflator provided with a single igniter and a single gas generating chamber is disclosed, and, in Example 1 to 3 thereof, a mixture of $N_2O$ of 50% and $CO_2$ of 50% is used in an amount of 140 g as a pressurized medium.

Disclosure of the Invention

An object of the present invention is to provide a hybrid inflator in which reduction in size and weight can be achieved without deteriorating an operation performance of the inflator.
The present inventors found that evaporation of liquefied gas is promoted to inflate the air bag unfailingly and rapidly by using both of the liquefied gas and a combustion gas of a gas generating agent as inflating means for an air bag, and an inflator can be reduced in size and weight as compared with a case of using a pressurized gas such as argon, helium or the like, and they completed the present invention by further modifying the inflator to a structure suitable to use liquefied gas and combustion gas of a gas generating agent in combination. When the terms "the number of moles", "a molar ratio" and "a charged amount" of a gas generating agent are hereinafter used in this invention, these terms are based upon a molar number of gas generated due to dissolution/combustion of a used gas generating agent.

(1) First solving means

The invention described in claim 1 provides, as one means for solving the above problem, a hybrid inflator for an inflatable safety system of a vehicle provided with an air bag, comprising an inflator housing, one or two gas generating chambers which is combined with the inflator housing and provided with a gas generating agent, and one or two ignition means chambers provided with ignition means connected to the one or two gas generating chambers, wherein

a liquefied gas is charged in a sealed space which is the remaining portion in the inflator housing except for the gas generating chamber and the ignition means accommodating chamber, and a molar ratio (the number of moles of the liquefied gas/the number of moles of the gas generating agent) of the liquefied gas and the gas generating agent is 0.2 to 5.
Examples of the inflating means for an air bag includes only an inert gas such as argon or helium, only a combustion gas of the gas generating agent, or a case of using the both. In this invention, the following advantageous effects (a) and (b) can be obtained by using the liquefied gas and the combustion gas of the gas generating agent in combination as the inflating means, and relating the molar ratio of the liquefied gas and the gas generating agent.

(a) The inflator housing can be reduced in size as compared with a case of using a pressurized gas such as argon, the inflator can be wholly reduced in size and in weight.
(b) The liquefied gas is gasified rapidly according to an action of the combustion gas, and an air bag can be inflated unfailingly and rapidly at a time of actuation of the hybrid inflator. The combustion gas at this time acts to inflate the air bag unfailingly and rapidly due to promoted evaporation of the liquefied gas and also acts to inflate the air bag together with the liquefied gas.

In the above-described invention, in order to achieve the object of the present invention, the molar ratio (the number of moles of the liquefied gas/the number of moles of the gas generating agent) of the liquefied gas and the gas generating agent is 0.2 to 5, preferably 0.6 to 3, and further preferably 0.8 to 2.

In the above-described invention, in order to achieve the object of the present invention, a charged amount of the liquefied gas is preferably 0.6 to 3 moles, more preferably 1.4 to 2.7 moles and further preferably 1.6 to 2.4 moles.

In the above-described invention, in order to achieve the object of the present invention, a charged amount of the gas generating agent is preferably 0.6 to 3 moles, more preferably 0.9 to 2.2 moles and further preferably 1.2 to 2.

In the above-described invention, it is preferable that carbon dioxide is used as the liquefied gas, and nitrous oxide can also be used. It is preferable that a non-azide gas generating agent is used as the gas generating agent.

(2) Second solving means

The invention described in claim 8 provides, as one means for solving the above problem, a hybrid inflator for an inflatable safety system of a vehicle provided with an air bag, comprising an inflator housing, one or two gas generating chambers which is combined with the inflator housing and provided with a gas generating agent, and one or two ignition means chambers provided with ignition means connected to the one or two gas generating chambers, wherein

a liquefied gas is charged in a sealed space which is the remaining portion in the inflator housing except for the gas generating chamber and the ignition means accommodating chamber, and

the gas generating agent includes, as a fuel, one or at least two selected from the group consisting of a triadine derivative, a tetrazole derivative, a triazole derivative, a guanidine derivative, an azo-dicarboxylic amide derivative, and a hydrazine derivative, and includes ammonium nitrate as an oxidizing agent.

Since ammonium nitrate as the oxidizing agent does not include a component which generates a combustion residue, it has a merit that a gas output (an amount of generated gas with respect to an amount of the gas generating agent) is high. Using this merit, the advantageous effect (a) and (b) can be obtained by combining ammonium nitrate and a specific fuel and further combining with liquefied gas.

(3) Third solving means

The invention described in claim 9 provides, as one means for solving the above problem, a hybrid inflator for an inflatable safety system of a vehicle provided with an air bag, comprising an inflator housing, a single gas generating chamber which is combined with the inflator housing and provided with a gas generating agent, and a single ignition means chamber provided with ignition means connected to the single gas generating chamber, wherein

the inflator housing is formed cylindrically, and is provided at an one end side thereof with the gas generating chamber and is provided at the remaining portion thereof with a liquefied gas charged space charged with a liquefied gas, and a diffuser portion having a gas discharging port is provided between the liquefied gas charged space and the gas generating chamber,

a path which communicates the gas generating chamber with the diffuser portion is closed in a moisture-proof state, and a path which communicates the liquefied gas charged space with the diffuser portion is closed in an air-tight state by a rupturable plate A, and

an inflating means for an air bag comprises a liquefied gas charged in the inflator housing and a gas generated by combustion of the gas generating agent.

In the hybrid inflator, in order to obtain the advantageous effect (a) and (b), it is preferable that the molar ratio (the number of moles of the liquefied gas/the number of moles of the gas generating agent) of the liquefied gas and the gas generating agent is 0.2 to 5.

The above-described invention is a single type hybrid inflator provided with a single gas generating chamber, and uses liquefied gas in combination with combustion gas of the gas generating agent as the inflating means, preferably, specifying the molar ratio of the liquefied gas to the gas generating agent, further modifying the structure of the inflator, so that the advantageous effect (a) and (b) is improved.

In the above-described invention, at a time of actuation of the hybrid inflator, the liquefied gas and the combustion gas generated in the gas generating chamber are mixed in the diffuser portion and then, it is discharged from the gas discharging port.

The invention described in claim 12 provides, as one means for solving the above problem, a hybrid inflator for an inflatable safety system of a vehicle provided with an air bag, comprising an inflator housing, a single gas generating chamber which is combined with the inflator housing and provided with a gas generating agent, and a single ignition means chamber provided with ignition means connected to the single gas generating chamber, wherein

the inflator housing is formed cylindrically, and is provided at an one end side thereof with the gas generating chamber and is provided at the remaining portion thereof with a liquefied gas charged space charged with a liquefied gas, and a diffuser portion having a gas discharging port is provided between the liquefied gas charged space and the gas generating chamber,

an opening of a discharging path of a combustion gas generated in the gas generating chamber is positioned in the liquefied gas charged space, and the discharging path is closed by a rupturable plate A, and one or at least two paths communicating the liquefied gas charged space with the diffuser portion are closed in an air-tight state by a rupturable plate B, and

an inflating means for an air bag comprises a liquefied gas charged in the inflator housing and a gas generated by combustion of the gas generating agent.

In the hybrid inflator, in order to obtain the advantageous effect (a) and (b), it is preferable that the molar ratio (the number of moles of the liquefied gas/the number of moles of the gas generating agent) of the liquefied gas and the gas generating agent is 0.2 to 5.

The above-described invention is a single type hybrid inflator provided with a single gas generating chamber, and liquefied gas and combustion gas of the gas generating agent are used in combination as the inflating means, preferably, the molar ratio of the liquefied gas to the gas generating agent, further modifying the structure of the inflator, so that the advantageous effect (a) and (b) are improved.

In the above-described invention, such a structure can be employed that the discharging path of the combustion gas generated in the gas generating chamber is formed of a cylindrical member, the opening at one end is in communication with the gas generating chamber, an opening at the other end is closed by the rupturable plate A, and the opening at the other end is positioned in the liquefied gas charged space. By employing such a structure, the liquefied gas and the combustion gas generated in the gas generating chamber are mixed more smoothly.

In the above-described invention, after the liquefied gas and the combustion gas generated in the gas generating chamber are mixed in the liquefied gas charged space at a time of actuation of the hybrid inflator, they are slightly mixed even in the diffuser portion and discharged from a gas discharging port. By discharging the combustion gas generated in the gas generating chamber from the gas discharging port via the diffuser portion after introducing the combustion gas into the liquefied gas charged space in this manner, the liquefied gas and the combustion gas are mixed much better.

In the invention described in the above claims 9, 12 or the like, it is preferable that a rupturing means which is moved upon receipt of a pressure due to a combustion gas generated in the gas generating chamber is provided as rupturing means for the rupturable plate A.

In the invention described in the above claim 9 or the like, it is preferable that a rupturing means which is moved upon receipt of a pressure due to combustion gas generated in the gas generating chamber is provided as the rupturing means for the rupturable plate A, and the rupturing means is disposed in the diffuser portion. Such rupturing means for the rupturable plate A is moved upon receipt of a pressure, and it jumps into the liquefied gas charged space and remains therein after it ruptures the rupturable plate A.

In the invention described in claim 9 or the like, it is preferable that the rupturing means for the rupturable plate A is pressed and supported by an annular resilient supporting member disposed in the diffuser portion, the rupturing means is released upon receipt of a pressure due to the combustion gas generated in the gas generating chamber, and re-movement of the rupturing means is limited by deformation of the resilient supporting member after the rupturing means ruptures the rupturable plate A.

By using such an annular resilient supporting member, even when the rupturing means does not jump into the liquefied gas discharging space after it ruptures the ruptuarable plate A, or the rupturing means jumps out again after it jumped into the liquefied gas charged space, the gas flow path is prevented from being closed by the rupturing means.

The annular resilient supporting member has a gas flow hole, and by employing such a constitution that the gas flow hole serves as a filter, broken pieces of the broken rupturable plate A can be prevented from flowing into the air bag.

In the invention described in claim 9, 12 or the like, it is preferable that the rupturing means for the rupturable plate A is disposed in a path which communicates the diffuser portion with the gas generating chamber or in a discharging path of the combustion gas which communicates the gas generating chamber with the liquefied gas charged space, and the rupturing means moves upon receipt of a pressure of the combustion gas generated in the gas generating chamber.

In the invention described in claim 9 or the like, preferably, rupturing means which is moved upon receipt of a pressure due to combustion gas generated in the gas generating chamber is provided as the rupturing means for the rupturable plate A, the rupturing means is disposed in a path which communicates the diffuser portion with the gas generating chamber, and the rupturing means develops a moisture-proof action before it is moved. As described above, when such a constitution is employed that the rupturing means exhibits a moisture-proof action, before it is moved, to prevent moisture from intruding in the gas generating chamber, it is unnecessary to use another moisture-proof tape.

In the invention described in claim 9, 12 or the like, it is preferable that the rupturing means for the rupturable plate A is formed in a ball-like shape or an arrowhead-like shape in order to easily rupture the rupturable plate A. Since the rupturing means jumps into the liquefied gas charged space after rupturing the rupturable plate A, the shape or size of the rupturing means is set according to a shape or size of an opening to be formed after the rupturable plate A is ruptured.

In each of the above-described inventions, in order to achieve the object of the present invention, the molar ratio (the number of moles of the liquefied gas/the number of moles of the gas generating agent) of the liquefied gas and the gas generating agent is 0.2 to 5, preferably 0.6 to 3, and further preferably 0.8 to 2.

In each of the above-described inventions, in order to achieve the object of the present invention, a charged amount of the liquefied gas is preferably 0.6 to 3 moles, more preferably 1.4 to 2.7 moles and further preferably 1.6 to 2.4 moles.

In each of the above-described inventions, in order to achieve the object of the present invention, a charged amount of the gas generating agent is preferably 0.6 to 3 moles, more preferably 0.9 to 2.2 moles and further preferably 1.2 to 2 moles.

In each of the above-described invention, it is preferable that carbon dioxide is used as the liquefied gas, and nitrous oxide can also be used. It is preferable that a non-azide gas generating agent is used as the gas generating agent.

(4) Fourth solving means

The invention described in claim 23 provides, as one means for solving the above problem, a hybrid inflator for an inflatable safety system of a vehicle provided with an air bag, comprising an inflator housing, two gas generating chambers which are combined with the inflator housing and provided with a gas generating agent, and two ignition means chambers provided with ignition means connected to the two gas generating chambers, wherein

the inflator housing is formed cylindrically, and is provided at an one end side thereof with a first gas generating chamber and at the other end side with a second gas generating chamber, and is provided at the remaining portion thereof with a liquefied gas charged space charged with a liquefied gas, and a diffuser portion having a gas discharging port is provided between the liquefied gas charged space and the first gas generating chamber,

a path which communicates the first gas generating chamber with the diffuser portion is closed in a moisture-proof state, and a path which communicates the liquefied gas charged space with the diffuser portion is closed in an air-tight state by a first rupturable plate, and a path which which communicates the liquefied gas charged space with the second gas generating chamber is closed in an air-tight state by a second rupturable plate, and

an inflating means for an air bag comprises a liquefied gas charged in the inflator housing and a gas generated by combustion of the gas generating agent.

In the hybrid inflator, in order to obtain the advantageous effect (a) and (b), it is preferable that the molar ratio (the number of moles of the liquefied gas/the number of moles of the gas generating agent) of the liquefied gas and the gas generating agent is 0.2 to 5.

The above-described invention is a dual type hybrid inflator provided with two gas generating chambers, and liquefied gas and combustion gas of the gas generating agent are used in combination as the inflating means, preferably, specifying the molar ratio of the liquefied gas to the gas generating agent, further modifying the structure of the inflator, so that the advantageous effect (a) and (b) are improved.

In the above-described invention, at a time of actuation of the hybrid inflator, the liquefied gas and the combustion gas generated in the first gas generating chamber are mixed in the diffuser portion; and then, it is discharged from the gas discharging port.

The invention described in claim 26 provides, as one means for solving the above problem, a hybrid inflator for an inflatable safety system of a vehicle provided with an air bag, comprising an inflator housing, two gas generating chambers which are combined with the inflator housing and provided with a gas generating agent, and two ignition means chambers provided with ignition means connected to the two gas generating chambers, wherein

the inflator housing is formed cylindrically, and is provided at an one end side thereof with a first gas generating chamber and at the other end side with a second gas generating chamber, and is provided at the remaining portion thereof with a liquefied gas charged space charged with a liquefied gas, and a diffuser portion having a gas discharging port is provided between the liquefied gas charged space and the first gas generating chamber,

an opening of a discharging path of a combustion gas generated in the first gas generating chamber is positioned in the liquefied gas charged space, the discharging path is closed by a first rupturable plate, a path which communicates the liquefied gas charged space with the second gas generating chamber is closed in an air-tight state by a second rupturable plate, and one or at least two paths which communicate the liquefied gas charged space with the diffuser portion are further closed in an air-tight state by a third rupturable plate, and

an inflating means for an air bag comprises a liquefied gas charged in the inflator housing and a gas generated by combustion of the gas generating agent.

In the hybrid inflator, in order to obtain the advantageous effect (a) and (b), it is preferable that the molar ratio (the number of moles of the liquefied gas/the number of moles of the gas generating agent) of the liquefied gas and the gas generating agent is 0.2 to 5.

The above-described invention is a dual type hybrid inflator provided with two gas generating chambers, and liquefied gas and combustion gas of the gas generating agent are used in combination as the inflating means. preferably, specifying the molar ratio of the liquefied gas to the gas generating agent, further modifying the structure of the inflator, so that the advantageous effect (a) and (b) are improved.

In the above-described invention, preferably, such a structure can be employed that the discharging path of the combustion gas generated in the first gas generating chamber is formed of a cylindrical member, the opening at one end is in communication with the first gas generating chamber, an opening at the other end is closed by the first rupturable plate, and the opening at the other end is positioned in the liquefied gas charged space.

In the above-described invention, after the liquefied gas and the combustion gas generated in the gas generating chamber are mixed in the liquefied gas charged space at a time of actuation of the hybrid inflator, they are slightly mixed even in the diffuser portion and discharged from a gas discharging port. By discharging the combustion gas generated in the first gas generating chamber from the gas discharging port via the diffuser portion after introducing the combustion gas into the liquefied gas charged space in this manner, the liquefied gas and the combustion gas are mixed much better.

In the above-described invention, the combustion gas generated in the first gas generating chamber flows into the diffuser portion to be discharged from the gas discharging port, and the combustion gas generated in the second gas generating chamber flows into the diffuser portion via the liquefied gas charged space to be discharged from the gas discharging port.

By forming such a gas discharging path, a delay of an air bag inflating operation at a time of collision of a vehicle can be prevented due to an action of the first gas generating chamber, and the pressurized medium in the liquefied gas charging chamber is completely discharged due to an action of the second gas generating chamber, so that the air bag can be inflated instantaneously up to a sufficient degree of safety. Further, by utilizing the liquefied gas charged space as the discharging path of the combustion gas generated in the second gas generating chamber, the entire inflator can be reduced in size and in weight as compared with a case of separately providing a discharging path.

In the above-described invention, preferably, a rupturing means which is moved upon receipt of a pressure due to a combustion gas generated in the first gas generating chamber is provided as the rupturing means for the first rupturable plate. Such a rupturing means for the first rupturable plate is moved upon receipt of a pressure, and it jumps into the liquefied gas charged space and remains therein after it ruptures the first rupturable plate.

In the invention described in claim 23 or the like, it is preferable that the rupturing means which is moved upon receipt of a pressure due to a combustion gas generated in the first gas generating chamber is provided as the rupturing means for the first rupturable plate, and the rupturing means is disposed in the diffuser portion.

In the above-described invention described in claim 23 or the like, it is preferable that the rupturing means for the first rupturable plate is pressed and supported by an annular resilient supporting member disposed in the diffuser portion, the rupturing means is released upon receipt of a pressure due to the combustion gas generated in the first gas generating chamber, and re-movement of the rupturing means is limited by deformation of the resilient supporting member after the rupturing means ruptures the first rupturable plate.

By using such an annular resilient supporting member, even when the rupturing means does not jump into the liquefied gas charged space after it ruptures the first ruptuarable plate, or the rupturing means jumps out again after it once jumps into the liquefied gas charged space, the gas flow path is prevented from being closed by the rupturing means.

The annular resilient supporting member has a gas flow hole, and by employing such a constitution that the gas flow hole serves as a filter, broken pieces of the broken first rupturable plate can be prevented from flowing into the air bag.

In the invention described in claim 23, 26 or the like, preferably, the rupturing means for the first rupturable plate is disposed in a path which communicate the diffuser portion with the first gas generating chamber or a discharging path of a combustion gas which communicates the first gas generating chamber with the liquefied gas charged space, and the rupturing means is moved upon receipt of a pressure due to the combustion gas generated in the first gas generating chamber.

In the invention described in claim 23 or the like, preferably, the rupturing means which is moved upon receipt of a pressure due to a combustion gas generated in the first gas generating chamber is provided as the rupturing means for the first rupturable plate, and the rupturing means is disposed in a path which communicates the diffuser portion with the first gas generating chamber, and the rupturing means exhibits a moisture-proof action before it is moved.

In the invention described in claim 23, 26 or the like, preferably, the rupturing means for the first rupturable plate is formed in a ball-like shape or an arrowhead-like shape in order to easily rupture the first rupturable plate. Since the rupturing means jumps into the liquefied gas charged space after it ruptures the first rupturable plate, the shape or the size of the rupturing means is decided according to the shape or the size of an opening formed after the first rupturable plate is ruptured.

In each of the above inventions, a charging hole for the liquefied gas can be provided in the second gas generating chamber side.

In each of the above-described inventions, in order to achieve the above object of the invention, the molar ratio (the number of moles of the liquefied gas/the number of moles of the gas generating agent) of the liquefied gas and the gas generating agent is 0.2 to 5, preferably 0.6 to 3, and further preferably 0.8 to 2.

In each of the above-described inventions, in order to achieve the object of the present invention, a charged amount of the liquefied gas is preferably 0.6 to 3 moles, more preferably 1.4 to 2.7 moles and further preferably 1.6 to 2.4 moles.

In each of the above-described inventions, in order to achieve the object of the present invention, a charged amount of the gas generating agent is preferably 0.6 to 3 moles, more preferably 0.9 to 2.2 moles and further preferably 1.2 to 2 moles.

In each of the above-described inventions, it is preferable that carbon dioxide is used as the liquefied gas, and nitrous oxide can be also used. It is preferable that a non-azide gas generating agent is used as the gas generating agent.

The non-azide gas generating agent used in the hybrid inflator of each of the above-described first to fourth solving means comprises a fuel, an oxidizing agent, and a binder, additive or the like if required.

It is preferable that the non-azide gas generating agent (fuel) preferably includes one or at least two selected from the group consisting of triadine derivatives, tetrazole derivatives, triazole derivatives, guanidine derivatives, azo-dicarboxylic amide derivatives, and hydrazine derivatives, preferably, ammonium nitrate or the like is used as the oxidizing agent together with the fuel, and further preferably, ammonium nitrate is phase-stabilized ammonium nitrate.

The phase-stabilized ammonium nitrate is disclosed in, for example, JP-A 10-259085, and it can be obtained by evaporating and drying, under heating, an aqueous solution including ammonium nitrate and a required amount of phase-stabilizing agent (potassium salt such as potassium nitrate, potassium perchlorate, potassium chlorate, potassium chromate, potassium bichromate, potassium permanganate, potassium sulfate, potassium chloride, or potassium fluoride, which is soluble in hot water).

As triazine derivatives, at least one selected from the group consisting of triazine (1, 2, 3-triazine, 1, 2, 4-triazine, 1, 3, 5-triazine), melamine, trihydrazinotriazine, trimethylol melamine, alkylated methylol melamine, cyanuric acid derivatives such as ammeline, ammelide, ammeland, cyanuric acid or cyanurate esters, a nitric acid salt of melam, melem or melamine, a perchloric acid salt of melamine and nitro-melamine compound such as dinitroameline.

An example of tetrazole derivatives, triazole derivates, guanidine derivatives, azodicarbonamide derivates and hydrazine derivates can be selected from the group consisting of 5-oxo-1, 2, 4-triazole, tetrazole, 5-aminotetrazole, 5, 5'-bi-1H-tetrazole, guanidine, nitroguanidine, cyanoguanidine, triaminoguanidine nitrate, guanidine nitrate, guanidine carbonate, biuret, azodicarbonamide, carbohydrazide, carbohydrazide nitrate complex, dihydrazide oxalate and hydrazine-nitrate complex.

The oxidizing agent is preferably an oxidizing agent containing oxygen. The oxidizing agent can be at least one selected from the group consisting of oxyacid salt, metal oxide, metal complex oxide, metal peroxide, and basic metal nitrate, among which the basic metal nitrate is preferable.

The oxyacid salt can include cation selected from the group consisting of ammonium, alkaline metal and alkaline earth metal, and anion, which does not contain hydrogen, selected from the group of nitrite, nitrous acid, chloric acid and perchloric acid.

Examples of the oxyacid salt can be a nitrate, an alkaline metal salt or alkaline earth metal salt such as ammonium nitrate, sodium nitrate, potassium nitrate, magnesium nitrate, and strontium nitrate; an ammonium salt, an alkaline metal salt or an alkaline earth metal salt of nitrous acid such as ammonium nitrite, sodium nitrite, potassium nitrite, magnesium nitrite, and strontium nitrite; an ammonium salt, an alkaline metal salt or an alkaline earth metal salt of chloric acid such as ammonium chlorate, sodium chlorate, potassium chlorate, magnesium chlorate, barium chlorate and the like; an ammonium salt, an alkaline metal salt or an alkaline earth metal salt of perchloric acid such as ammonium perchlorate, sodium perchlorate, potassium perchrolate, magnesium perchrlorate, and barium perchlorate.

The metal oxide, metal peroxide and metal complex oxide include oxides, peroxides or complex oxides of copper, cobalt, iron, calcium, manganese, nickel, zinc, molybdenum or bismuth.

Such metal oxide, metal peroxide and metal complex oxide include, for example, $CuO$, $Cu_2O$, $Co_2O_3$, $CoO$, $Co_3O_4$, $Fe_2O_3$, $FeO$, $Fe_3O_4$, $CaO_2$, $MnO_2$, $Mn_2O_3$, $Mn_3O_4$, $NiO$, $ZnO$, $MoO_3$, $CoMoO_4$, $Bi_2MoO_6$ and $Bi_2O_3$.

The basic metal nitrates are a series of compounds represented by the formula below. Some compounds can also include hydrates.

$$M(NO_3)y \cdot nM(OH)z \text{ or } Mx'(NO_3)y'(OH)z'$$

wherein M represents a metal, x' represents the number of metals, y and y' each represent the number of $NO_3$ ions, z' represents the number of OH ions, and n represents the ratio of the M(OH)z moiety to the M($NO_3$)y moiety.

The compound of the above formulae is at least one selected from the group consisting of basic copper nitrates [$Cu_2(NO_3)(OH)_3$, $Cu_3(NO_3)(OH)_5 \cdot 2H_2O$], basic cobalt nitrate [$Co_2(NO_3)(OH)_3$], basic zinc nitrate [$Zn_2(NO_3)(OH)_3$], basic manganese nitrate [$Mn(NO_3)(OH)_2$], basic iron nitrate [$Fe_4(NO_3)(OH)_{11} \cdot 2H_2O$], basic molybdenum nitrate, basic bismuth nitrate [$Bi(NO_3)(OH)_2$] and basic cerium nitrate [$Ce(NO_3)_3(OH) \cdot 3H_2O$], containing copper, cobalt, zinc, manganese, iron, molybdenum, bismuth or cerium as the metal M. Among them, the basic copper nitrates are preferable.

When the gas generating agent includes the fuel and the oxidizing agent, the content of the fuel is preferably 5 to 60% by weight, more preferably 5 to 50% by weight, and further more preferably 10 to 30% by weight, and the content of the oxidizing agent is preferably 40 to 95% by weight, more preferably 50 to 95% by weight, and further more preferably 70 to 90% by weight.

The gas generating agent can further incorporate the binder in order to increase the strength of a molded article. The binder is at least one member selected from the group consisting of carboxymethyl cellulose (CMC), carboxymethyl cellulose sodium salt (CMCNa), carboxymethyl cellulose potassium salt, carboxymethyl cellulose ammonium salt, cellulose acetate, cellulose acetate butyrate (CAB), methyl cellulose (MC), ethyl cellulose (EC), hydroxyethyl cellulose (HEC), ethyl hydroxyethyl cellulose (EHEC), hydroxypropyl cellulose (HPC), carboxymethyl ethyl cellulose (CMEC), fine crystalline cellulose, polyacrylamide, aminated polyacrylamide, polyacryl hydrazide, acrylamide-metal acrylate copolymers, a copolymer of polyacrylamide and polyacrylate, polyvinyl alcohol, acrylic rubber, guar gum, starch and silicone. Among these, the carboxymethyl cellulose sodium salt (CMCNa) and guar gum are preferable in consideration of adhesion, price, ignitability etc.

The gas generating agent can incorporate the additive if required. The additive is at least one member selected from a metal oxide selected from the group consisting of copper oxide, iron oxide, zinc oxide, cobalt oxide, manganese oxide, molybdenum oxide, nickel oxide, bismuth oxide, silica and alumina; a metal hydroxide selected from the group consisting of aluminum hydroxide, cobalt hydroxide and iron hydroxide; a metal carbonate or a basic metal carbonate selected from the group consisting of cobalt carbonate, calcium carbonate, basic zinc carbonate and basic copper carbonate; a complex compound of metal oxide or metal hydroxide selected from the group consisting of Japanese acid clay, kaolin, talc, bentonite, diatomaceous earth and hydrotalcite; a metal acid salt selected from the group consisting of sodium silicate, mica, molybdate, cobalt molybdate and ammonium molybdate, silicone, molybdenum disulfide, calcium stearate, silicon nitride, silicon carbide and a catalyst having a metal such as ruthenium carried on alumina or silica.

When the gas generating agent includes the fuel, the oxidizing agent, and the binder or/and the additive, the content of the fuel is preferably 5 to 60% by weight, and more preferably 10 to 25% by weight, the content of the oxidizing agent is preferably 40 to 95% by weight, more preferably 40 to 85% by weight, and still more preferably 50 to 80% by weight, the content of the binder is preferably 0.1 to 15% by weight, and more preferably 1 to 10% by weight, and the content of the additive is preferably 0.1 to 20% by weight, and more preferably 3 to 15% by weight.

The gas generating agent can be formed in any desired shape and it can be formed to be a molded article such as a cylindrical shape, a single-perforated cylindrical shape, a porous cylindrical shape, a doughnut-like shape or a shape of a pellet. Such a molded article can be produced by a method in which water or organic solvent is added and mixed to a gas generating agent and the obtained material is extrusion-molded (the molded article of the single-perforated cylindrical shape or the porous cylindrical shape), or a method in which the molded article is obtained by compression-molding with a pelletizer or the like (the molded article in the shape of a pellet).

Further, the present invention provides, as another means for solving the above-described problem, an air bag system comprising an actuation-signal outputting means comprising an impact sensor and a control unit, and a module case accommodating the above-described hybrid inflator and an air bag in a case.

According to the hybrid inflator of the present invention, reduction in size and weight can be achieved, and further, operation performance can be exhibited.

Brief Description of the Drawings

Fig. 1 is an axial sectional view of a single type hybrid inflator,
Fig. 2 is an enlarged view of an annular supporting member shown in Fig. 1;
Fig. 3 is an axial sectional view of a single type hybrid inflator of another embodiment,
Fig. 4 is an axial sectional view of a dual type hybrid inflator,
Fig. 5 is an axial sectional view of a dual type hybrid inflator of another embodiment,
Fig. 6 is a partial sectional view of the another embodiment shown in Fig. 1 or Fig. 4,

Fig. 7 is a partial sectional view of the another embodiment shown in Fig. 1 or Fig. 4, and
Fig. 8 is a partial sectional view of the another embodiment shown in Fig. 1 or Fig. 4.

Reference of numerals

| 10, 100, 200, 300 | hybrid inflator |
| 12 | inflator housing |
| 20 | gas generating chamber (or first gas generating chamber) |
| 21 | gas generating agent (or first gas generating agent) |
| 26 | igniter (or first igniter) |
| 30 | diffuser portion |
| 40 | second gas generating chamber |
| 41 | second gas generating agent |
| 46 | second igniter |

Preferred Embodiments of the Invention

Embodiments of the invention will be explained according to the drawings, but the order of the embodiments described below does not correspond to the order of the solving means.

(1) First Embodiment

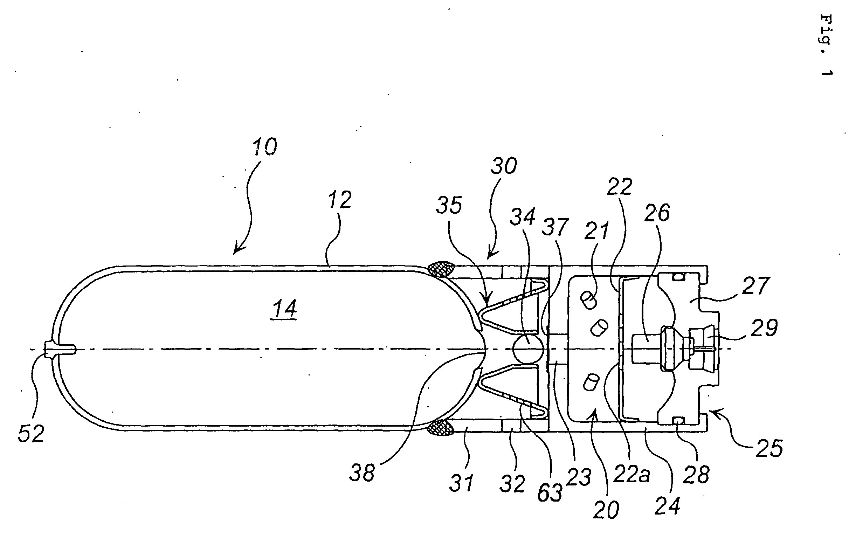

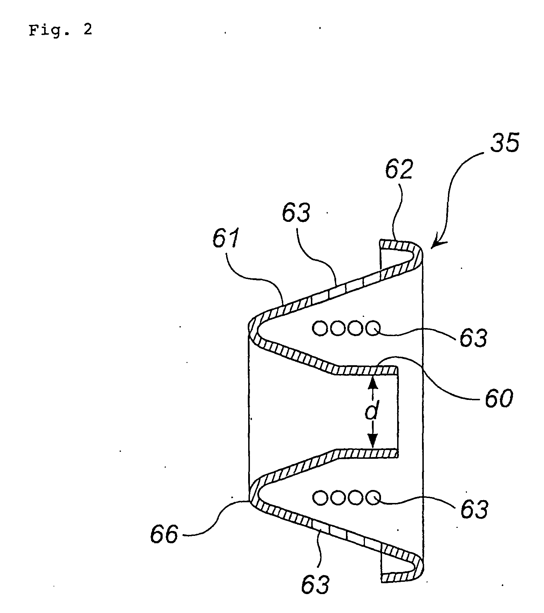

A first embodiment will be explained with reference to Fig. 1 and Fig. 2. Fig. 1 is an axial sectional view of a single type hybrid inflator having a single igniter and a single gas generating chamber, and Fig. 2 is a sectional view of an annular resilient supporting member 35 shown in Fig. 1.

A hybrid inflator 10 comprises a cylindrical inflator housing 12, a gas generating chamber 20 provided at one end of the inflator housing 12, an ignition means accommodating chamber 25, and a diffuser portion 30 provided between the inflator housing 12 and the gas generating chamber 20. The other end of the inflator housing 12 is closed. With respect to these chambers, outer shells thereof can be formed by at least two housings, and the respective housings are united by a fixing means such as welding, or respective chambers may be accommodated in one housing, for example, the inflator housing 12.

The outer shell of the gas generating chamber 20 is formed by the gas generating housing 24, and an required amount of gas generating agent 21 is charged therein. A volume of the gas generating chamber 20 is adjusted by moving a retainer 22 having a required number of holes 22a according to an amount of the gas generating agent 21.

The ignition means accommodating chamber 25 is provided adjacent to the gas generating chamber 20 via the retainer 22. An outer shell of the ignition means accommodating chamber 25 is formed by the gas generating housing 24, and an igniter 26 fitted into a collar 27 is accommodated therein. Numeral 28 denotes an O-ring and numeral 29 denotes a connector.

An outer shell of the diffuser portion 30 is formed by a diffuser portion housing 31, and the diffuser portion 30 is formed by being surrounded by an end surface of the inflator housing 12 and an end surface of the gas generating chamber housing 24. A required number of gas discharging ports 32 are provided in a peripheral wall of the diffuser portion housing 31.

An annular supporting member 35 supporting a ball-like rupturing means 34 for rupturing a rupturable plate A38 is disposed inside the diffuser portion 30. The ball-like rupturing means 34 is made of metal having the same material as that of the rupturable plate A38, and the diameter thereof is set to be smaller than that of an opening after the rupturable plate A38 is ruptured.

As shown in Fig. 2, the annular supporting member 35 has a section in a shape of substantially W-letter and is formed of an elastic material such as metal. The annular supporting member 35 has a central cylinder 60 and an annular peripheral wall 61, and an annular folded portion 62 folded in a shape of U-letter is formed at a distal end of the annular peripheral wall 61. The annular supporting member 35 is fixed by making an annular base portion 66 of the central cylinder 60 abut against an end surface of the inflator housing 12 and making the annular folded portion 62 press an inner wall surface of the diffuser portion housing 31.

The central cylinder 60 has such a flask shape that its diameter is gradually enlarged toward the rupturable plate A38, and the ball-like rupturing means 34 is pressed and supported by a resilience of the central cylinder 60. For this reason, when the ball-like rupturing means 34 is released, the central cylinder 60 serves as a guiding path which properly guides the ball-like rupturing means 34 to the rupturable plate A38, and the central cylinder 60 is deformed such that its diameter d becomes smaller due to its resilience, so that the ball-like rupturing means 34 after rupturing the rupturable plate A38 is prevented from jumping out of the central cylinder 60 to close a first through-hole 23. And thereby, a gas flow path is prevented from being closed.

A required number of gas flow holes 63 are provided in the annular peripheral wall 61, and the gas flow holes 63 allow a liquefied gas and a combustion gas to pass through and also, it serves as a filter for removing ruptured pieces of the rupturable plate A38.

The gas generating chamber 20 and the diffuser portion 30 are in communication with each other through the first through hole 23 provided in the gas generating chamber housing 24, and the first through hole 23 is closed by a sealing tape 37. Moisture invaded from the gas discharging ports 32 is prevented from intruding the gas generating chamber 20 by the sealing tape 37.

A sealed space 14 between the diffuser portion 30 and the inflator housing 12 communicates with each other through an opening (the diameter thereof being larger than that of the ball-like rupturing means 34) provided at an end portion of the inflator housing 12, and the opening is closed by the rupturable plate A38. The rupturable plate A38 is welded and fixed to the inflator housing 12.

The sealed space 14 is maintained hermetic, a liquefied gas is charged from a charging hole before closed by a sealing pin 52 and the charging hole is closed by welding a portion of the sealing pin 52 after charging the liquefied gas.

The hybrid inflator 10 uses a pressurized medium and a combustion gas of the gas generating agent in combination as an inflating means for an air bag, and evaporation of liquefied gas is promoted by the inflating means, so that an operation performance of the hybrid inflator 10 is enhanced. A required amount of liquefied gas such as carbon dioxide is charged into the sealed space 14 as the inflating means, and a gas generating agent 21 comprising the required amount of a non-azide gas generating agent is charged into the gas generating chamber 20.

The gas generating agent 21 includes one or at least two materials selected from a group consisting of triadine derivatives, tetrazole derivatives, triazole derivatives, guanidine derivative, azo-dicarboxylic amide derivative, and hydrazine derivative as the fuel, and preferably includes ammonium nitrate as an oxidizing agent. More specifically, guanidine nitrate/ammonium nitrate/ potassium nitrate/additive materials (a binder, an additive) and nitroguanidine/ phase-stabilized ammonium nitrate/ additive materials (a binder, an additive) can be used.

The molar ratio (the number of moles of the liquefied gas/the number of moles of the gas generating agent) of the liquefied gas and the gas generating agent is 0.2 to 5, more preferably 0.6 to 3, and further preferably 0.8 to 2; an amount of the charged liquefied gas is 0.6 to 3 moles, preferably 1.4 to 2.7 moles and further preferably 1.6 to 2.4 moles; and a charged amount of the gas generating agent is 0.6 to 3 moles, preferably 0.9 to 2.2 moles and further preferably 1.2 to 2 moles. By obtaining relationship of the molar ratio of the liquefied gas and the gas generating agent in this manner, the advantageous effects (a) and (b) can be enhanced.

(2) Second Embodiment

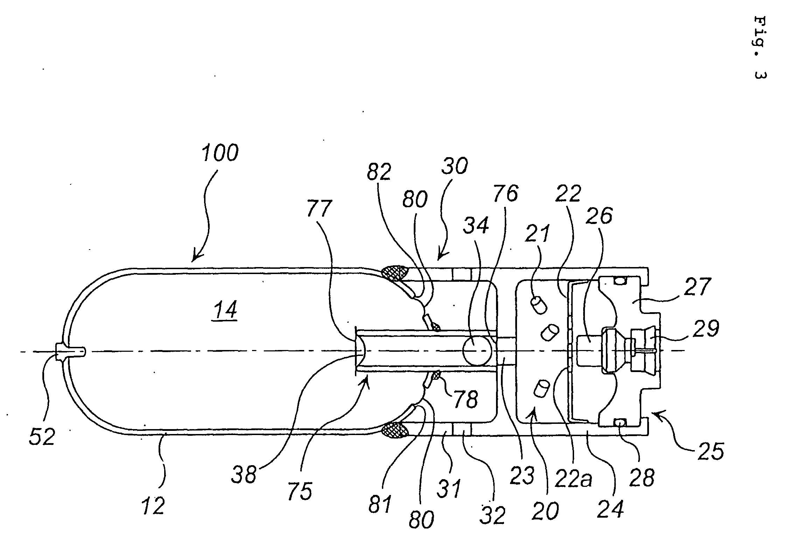

A second embodiment will be explained with reference to Fig. 3. Fig. 3 is an axial sectional view of a single type hybrid inflator 100 having a single igniter and a single gas generating chamber. The hybrid inflator 100 shown in Fig. 3 and the hybrid inflator 10 shown in Fig. 1 are different in constitution of a discharging path of a combustion gas and internal constitution of the diffuser portion 30, but they are identical in the other constitution. Therefore, the same constitution portions are attached with the same numerals, explanation thereof will be omitted, and only different constitution portions will be explained. Incidentally, a filter (a wire mesh, a punched metal or the like), which prevents broken pieces of the rupturable plate A38, rupturable plate B80 from flowing into the air bag, can be provided at a position facing the gas discharging ports 32 in the diffuser portion 30.

A first through hole 23 provided in the gas generating chamber housing 24 and the liquefied gas charged space 14 are in communication with each other through a cylindrical combustion gas introducing pipe 75, and the combustion gas generated in the gas generating chamber 20 does not flow into the diffuser portion 30 directly, but it flows into the diffuser portion 30 after flowing into the liquefied gas charged space 14.

An opening 76 at one end of the combustion gas introducing pipe 75 abuts against an end surface of the gas generating chamber housing 24 to surround the first through hole 23 with such a pressing force that moisture can be prevented from intruding into the gas generating chamber 20. An opening 77 at the other end of the combustion gas introducing pipe 75 is positioned in the liquefied gas charged space 14, and the opening 77 is closed by the rupturable plate A38 air-tightly. The combustion gas introducing pipe 75 and a side end surface of the diffuser portion 30 of the inflator housing 12 are welded at a welding portion 78.

A ball-like rupturing means 34 is inserted into the combustion gas introducing pipe 75. An inner diameter of the combustion gas introducing pipe 75 and a diameter of the ball-like rupturing means 34 are adjusted such that movement of the ball-like rupturing means 34 is blocked before actuation but the ball-like rupturing means 34 can easily move upon receipt of a pressure of the combustion gas generated in the gas generating chamber 20 at a time of actuation.

The required number of openings 81 and 82 are provided on a side surface of the inflator housing 12 in the diffuser portion 30 side, these openings are closed by a rupturable plate B80. The openings 81 and 82 closed by the rupturable plate B80 serve as discharging paths for the liquefied gas in the liquefied gas charged space 14 and the combustion gas towards the diffuser portion 30. The diameters of these openings 81 and 82 are set to be smaller than that of the ball-like rupturing means 34.

(3) Third Embodiment

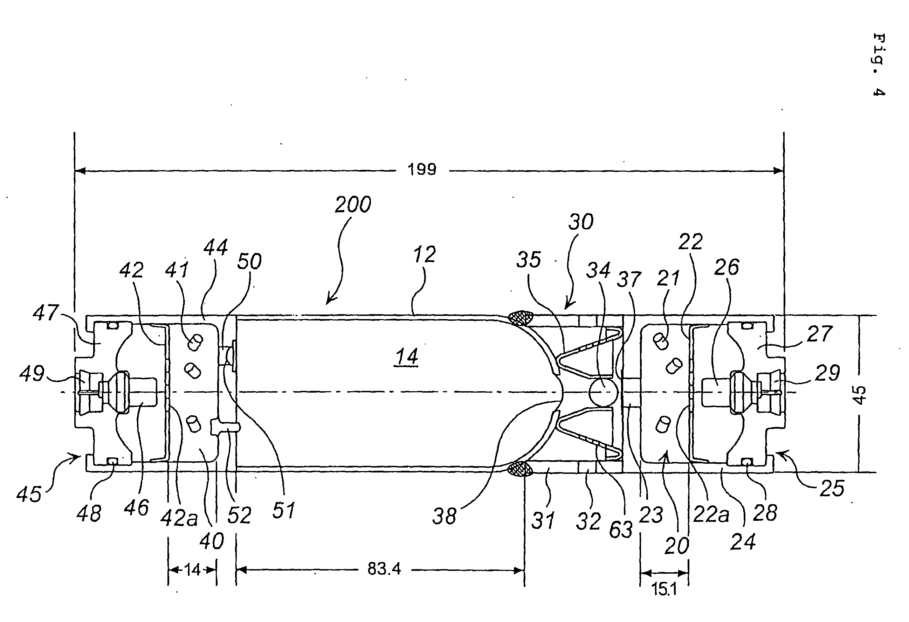

A third embodiment will be explained with reference to Fig. 4. Fig. 4 is an axial sectional view of a dual type hybrid inflator 200 having two igniters and two combustion chambers.

A hybrid inflator 200 comprises a cylindrical inflator housing 12, first and second gas generating chambers 20 and 40 provided at the respective ends of the inflator housing 12, first and second ignition means accommodating chambers 25 and 45, and a diffuser portion 30 provided between the inflator housing 12 and the gas generating chamber 20. With respect to these chambers, outer shells thereof can be formed by at least two housings, and the respective housings are united by a fixing means such as welding, or respective chambers may be accommodated in one housing, for example, the inflator housing 12.

The outer shell of the first gas generating chamber 20 is formed by the first gas generating housing 24, and an required amount of a first gas generating agent 21 is charged therein. A volume of the first gas generating chamber 20 is adjusted by moving a retainer 22 having a required number of holes 22a according to an amount of the fist gas generating agent 21.

The first ignition means accommodating chamber 25 is provided adjacent to the first gas generating chamber 20 via the retainer 22. An outer shell of the first ignition means accommodating chamber 25 is formed by the first gas generating housing 24, and a first igniter 26 fitted into a collar 27 is accommodated therein. Numeral 28 denotes an O-ring and numeral 29 denotes a connector.

An outer shell of the diffuser portion 30 is formed by a diffuser portion housing 31, and the diffuser portion 30 is formed by being surrounded by an end surface of the inflator housing 12 and an end surface of the gas generating chamber housing 24. A required number of gas discharging ports 32 are provided in a peripheral wall of the diffuser portion housing 31.

An annular supporting member 35 supporting a ball-like rupturing means 34 for rupturing a first rupturable plate 38 is disposed inside the diffuser portion 30. The ball-like rupturing means 34 is made of metal having the same material as that of the first rupturable plate 38, and the diameter thereof is set to be smaller than that of an opening after the first rupturable plate 38 is ruptured.

As shown in Fig. 2, the annular supporting member 35 has a section in a shape of substantially W-letter and is formed of an elastic material such as metal. The annular supporting member 35 has a central cylinder 60 and an annular peripheral wall 61, and an annular folded portion 62 folded in a shape of U-letter is formed at a distal end of the annular peripheral wall 61. The annular supporting member 35 is fixed by making an annular base portion 66 of the central cylinder 60 abut against an end surface of the inflator housing 12 and making the annular folded portion 62 press an inner wall surface of the diffuser portion housing 31.

The central cylinder 60 has such a flask shape that its diameter is gradually enlarged toward the first rupturable plate 38, and the ball-like rupturing means 34 is pressed and supported by a resilience of the central cylinder 60. For this reason, when the ball-like rupturing means 34 is released, the central cylinder 60 serves as a guiding path which properly guides the ball-like rupturing means 34 to the first rupturable plate 38, and the central cylinder 60 is deformed such that its diameter d becomes smaller due to its resilience, so that the ball-like rupturing means 34 after rupturing the first rupturable plate 38 is prevented from jumping out of the central cylinder 60 to close a first through-hole 23. And thereby, a gas flow path is prevented from being closed.

A required number of gas flow holes 63 are provided in the annular peripheral wall 61, and the gas flow holes 63 allow a liquefied gas and a combustion gas to pass through and also, it serves as a filter for removing ruptured pieces of the first rupturable plate 38.

The first gas generating chamber 20 and the diffuser portion 30 are in communication with each other through the first through hole 23 provided in the gas generating chamber housing 24, and the first through hole 23 is closed by a sealing tape 37. Moisture invaded from the gas discharging ports 32 is prevented from intruding the first gas generating chamber 20 by the sealing tape 37.

A sealed space 14 between the diffuser portion 30 and the inflator housing 12 communicates with each other through an opening (the diameter thereof being larger than that of the ball-like rupturing means 34) provided at an end portion of the inflator housing 12, and the opening is closed by the first rupturable plate 38. The first rupturable plate 38 is welded and fixed to the inflator housing 12.

The outer shell of the second gas generating chamber 40 is formed by the second gas generating housing 44, and an required amount of a second gas generating agent 41 is charged therein. A volume of the second gas generating chamber 40 is adjusted by moving a retainer 42 having a required number of holes 42a according to an amount of the second gas generating agent 41.

The second ignition means accommodating chamber 45 is provided adjacent to the second gas generating chamber 40 via the retainer 42. An outer shell of the second ignition means accommodating chamber 45 is formed by the second gas generating housing 44, and a second igniter 46 fitted into a collar 47 is accommodated therein. Numeral 48 denotes an O-ring and numeral 49 denotes a connector.

The second gas generating chamber 40 and a sealed space (a liquefied gas charged space) 14 of the inflator housing 12 communicate with each other via a second through-hole 50 provided in a second gas generating chamber housing 44, and the second through-hole 50 is closed by a second rupturable plate 51. The second rupturable plate 51 is welded and fixed to the second gas generating chamber housing 44.

The sealed space 14 is surrounded by the inflator housing 12, the first rupturable plate 38, the second gas generating chamber housing 44 and the second rupturable plate 51 and maintained hermetic. A liquefied gas is charged from a charging hole before the charging hole is closed by a sealing pin 52, and the charging hole is closed by welding a portion of the sealing pin 52 after the liquefied gas is charged.

The hybrid inflator 200 uses a pressurized medium and a combustion gas of the gas generating agent in combination as an inflating means for an air bag, and evaporation of liquefied gas is promoted by the inflating means, so that an operation performance of the hybrid inflator 200 is enhanced. A required amount of liquefied gas such as carbon dioxide is charged into the sealed space 14 as the inflating means, and the first and second gas generating agents 21 and 41 comprising the required amount of a non-azide gas generating agent are charged into the first and second gas generating chambers 20 and 40.

The gas generating agents 21 and 41 includes one or at least two materials selected from a group consisting of triadine derivatives, tetrazole derivatives, triazole derivatives, guanidine derivative, azo-dicarboxylic amide derivative, and hydrazine derivative as the fuel, and preferably includes ammonium nitrate as an oxidizing agent. More specifically, guanidine nitrate/ammonium nitrate/ potassium nitrate/additive materials (a binder, an additive) and nitroguanidine/phase-stabilized ammonium nitrate/ additive materials (a binder, an additive) can be used.

The molar ratio (the number of moles of the liquefied gas/the number of moles of the gas generating agent) of the liquefied gas and the gas generating agent is 0.2 to 5, more preferably 0.6 to 3, and further preferably 0.8 to 2; an amount of the charged liquefied gas is 0.6 to 3 moles, preferably 1.4 to 2.7 moles and further preferably 1.6 to 2.4 moles; and a charged amount of the gas generating agent is 0.6 to 3 moles, preferably 0.9 to 2.2 moles and further preferably 1.2 to 2 moles. By obtaining relationship of the molar ratio of the liquefied gas and the gas generating agent in this manner, the advantageous effects (a) and (b) can be enhanced.

Next, an operation of an air bag system incorporated with the hybrid inflator 200 will be explained with reference to Fig. 4 and Fig. 2.

When a vehicle collides, the first igniter 26 is actuated upon receipt of an actuation signal from the control unit to burn the first gas generating agent 21 in the first gas generating chamber 20. The generated combustion gas flows into the first through hole 23 to break the sealing tape 37, and further pushes the ball-like rupturing means 34. After the ball-like rupturing means 34 which received a pressure due to the combustion gas is released from the annular supporting member 35 to collide and rupture the first rupturable plate 38, it flied into the liquefied gas charged space 14 to remain therein owing to its own weight against ejecting pressure of gas.

The charged liquefied gas immediately gasifies by a temperature rising due to inflow of the combustion gas with a high temperature into the liquefied gas charged space 14 and a rapid pressure-reduction in the sealed space 14 due to rupturing of the first rupturable plate 38, and the gas is discharged from the gas discharging ports 32 via the central cylinder 60 of the annular supporting member 35 and the gas flow holes 63 of the annular peripheral wall to inflate the air bag. Incidentally, when the ball-like rupturing means 34 is released, the central cylinder 60 of the annular supporting member 35 deforms inwardly to narrow its diameter d, so that the ball-like rupturing means 34 jumped into the liquefied gas charged space 14 is prevented from jump out of the central cylinder 60 to close a first through-hole 23. And thereby, a gas flow path is prevented from being closed.

Similarly, the second igniter 46 is actuated upon receipt of an actuation signal from the control unit with a slight delay from actuation of the first igniter 26 to burn the second gas generating agent 41 in the second gas generating chamber 40. The generated combustion gas flows into the second through-hole 50 to rupture the second rupturable plate 51 to flow into the sealed space 14, and it is discharged together with the remaining liquefied gas from the gas discharging ports 32 to inflate the air bag.

Incidentally, the hybrid inflator 10 of the first embodiment shown in Fig. 1 described above operates in the same manner as the hybrid inflator 200 except that an operation due to generation of the combustion gas from the second gas generating chamber 40 does not occur.

Thus, by generating combustion gas in two stages, the hybrid inflator 200 described above prevents a delay in an air bag inflating operation at a time of collision of a vehicle with an action of the first gas generating chamber 20 and discharges the pressurized medium in the inflator housing 12 completely with an action of the second gas generating chamber 40, thereby allowing instantaneous inflation of the air bag to a sufficient degree of safety. Further, since two gas generating chambers are provided, the present invention can also meet an embodiment such that a combustion gas is generated from only the first gas generating chamber 20, or meet an embodiment such that combustion gas generating timings in the first gas generating chamber 20 and in the second gas generating chamber 40 are properly adjusted to a desirable interval.

(4) Fourth Embodiment

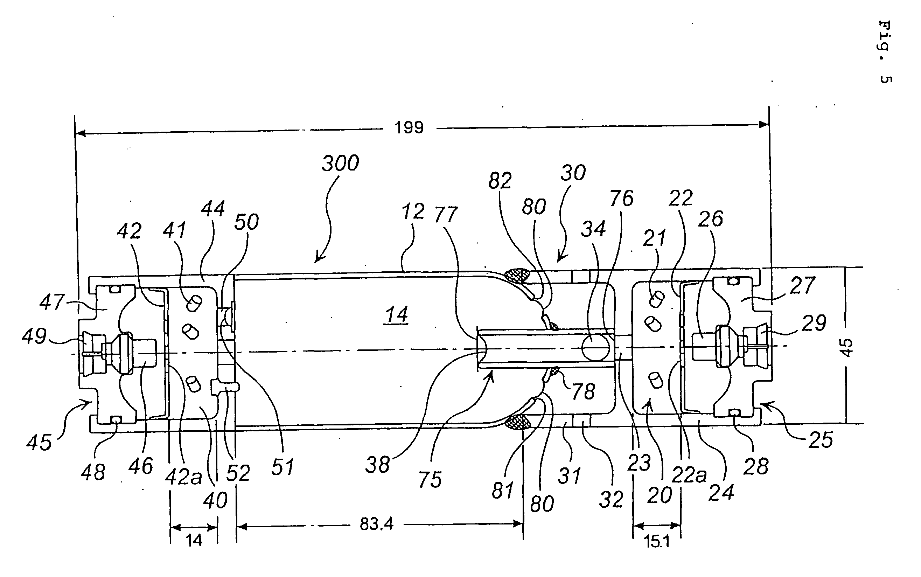

A fourth embodiment will be explained with reference to Fig. 5. Fig. 5 is an axial sectional view of a dual type hybrid inflator 300 having two igniters and two gas generating chambers. The hybrid inflator 300 and the hybrid inflator 100 shown in Fig. 3 are entirely identical to each other except for the second gas generating chamber 40 and the second ignition means accommodating chamber 45, and the second gas generating chamber 40 and the second ignition means accommodating chamber 45 are entirely identical to those of the hybrid inflator 200 shown in Fig. 4. Incidentally, a filter (a wire mesh, punched metal or the like) for preventing broken pieces of a first rupturable plate 38, a second rupturable plate 51 and a third rupturable plate 80 from flowing in an air bag can be provided at a position facing a gas discharging port 32 in the diffuser portion 30.

Next, an operation of an air bag system incorporated with the hybrid inflator 300 will be explained with reference to Fig. 5.

When a vehicle collides, the first igniter 26 is actuated upon receipt of an actuation signal from the control unit to burn the first gas generating agent 21 in the first gas generating chamber 20. The generated combustion gas flows from the first through hole 23 into the combustion gas introducing pipe 71 to press the ball-like rupturing means 34. After the ball-like rupturing means 34 received a pressure due to the combustion gas moves in the combustion gas introducing pipe 75 to collide and rupture the first rupturable plate 38, it jumps into the liquefied gas charged space 14.

Due to the rupture of the first rupturable plate 38, a combustion gas with a high temperature flows into the liquefied gas charged space 14, and thereby, a pressure in the space 14 rises and the third rupturable plate 80 is ruptured due to the pressure rising. Because of the rupture of the third rupturable plate 80, the pressure inside the sealed space 14 is rapidly reduced, and thereby, the charged liquefied gas gasifies immediately to flow into the diffuser portion 30 from the openings 81 and 82. And then, the gas is discharged from the gas discharging ports 32 to inflate the air bag. Incidentally, the ball-like rupturing means 34 remains in the liquefied gas charged space 14 against a ejecting pressure of the gas owing to its own weight.

Similarly, the second igniter 46 is actuated upon receipt of an actuation signal from the control unit with a slight delay from actuation of the first igniter 26 to burn the second gas generating agent 41 in the second gas generating chamber 40. The generated combustion gas flows into the second through-hole 50 to rupture the second rupturable plate 51 to flow into the sealed space 14, and it is discharged together with the remaining liquefied gas from the gas discharging ports 32 to inflate the air bag.

Incidentally, the hybrid inflator 100 of the second embodiment shown in Fig. 3 described above operates in the same manner as the hybrid inflator 300 except that an operation due to generation of the combustion gas from the second gas generating chamber 40 does not occur.

Thus, by generating combustion gas in two stages, the hybrid inflator 300 described above prevents a delay in an air bag inflating operation at a time of collision of a vehicle with an action of the first gas generating chamber 20 and discharges the pressurized medium in the inflator housing 12 completely with an action of the second gas generating chamber 40, thereby allowing instantaneous inflation of the air bag to a sufficient degree of safety. Further, since two gas generating chambers are provided, the present invention can also meet an embodiment such that a combustion gas is generated from only the first gas generating chamber 20, or meet an embodiment such that combustion gas generating timings in the first gas generating chamber 20 and in the second gas generating chamber 40 are properly adjusted to a desirable interval.

(5) Other Embodiments

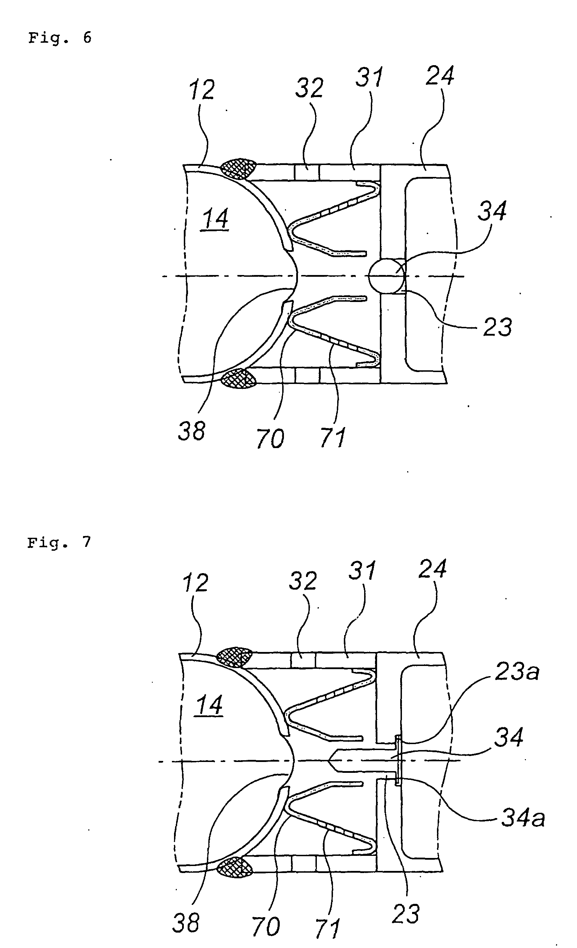

Next, embodiments employing different rupturing means as repturing means of the rupturable plate A38 (or the first rupturable plate 38) will be explained with reference to Fig. 6 to Fig. 8. Respective rupturing means 34 shown in Fig. 6 to Fig. 8 are made of metal which is the same material as the rupturable plates A38 (or the first rupturable plates 38). These embodiments shown in Fig. 6 to Fig. 8 can be applied to the hybrid inflators shown in Fig. 1 and Fig. 4. In the followings, cases in which the embodiments are applied to the hybrid inflator 200 shown in Fig. 4 will be explained.

In the embodiment shown in Fig. 6, the ball-like rupturing means 34 for the first rupturable plate 38 is held in the first through hole 23 which communicates the first gas generating chamber housing 24 with the diffuser portion housing 31. At this time, the first gas generating chamber housing 24 is made of metal such as stainless steel, so that the ball-like rupturing means 34 is pressed and held from an inner peripheral surface of the first through hole 23 by setting the diameter of the ball-like rupturing means 34 slightly smaller than that of the first through hole 23. The ball-like rupturing means 34 may be fixed by an adhesive. The ball-like rupturing means 34 also exhibits a moisture-proof action similarly to the sealing tape 37 shown in Fig. 4.

An annular member 70 has the required number of gas flow holes 71, and it forms a guidance path for the ball-like rupturing means 34 and a gas flow path, and it exhibits a filtering function for preventing broken pieces of the ruptured first rupturable plate 38 from flowing into the air bag.

The embodiment shown in Fig. 7 is similar to the embodiment shown in Fig. 6 except that arrowhead-like rupturing means 34 is used as the rupturing means for the first rupturable plate 38. The arrowhead-like rupturing means 34 has a flange-like base portion 34a and the flange-like base portion 34a is adhered to a stepped portion 23a provided in the first through hole 23 by an adhesive. The flange-like base portion 34a of the arrow-shaped rupturing means 34 also exhibits a moisture-proof action similar to the sealing tape 37 shown in Fig. 4.

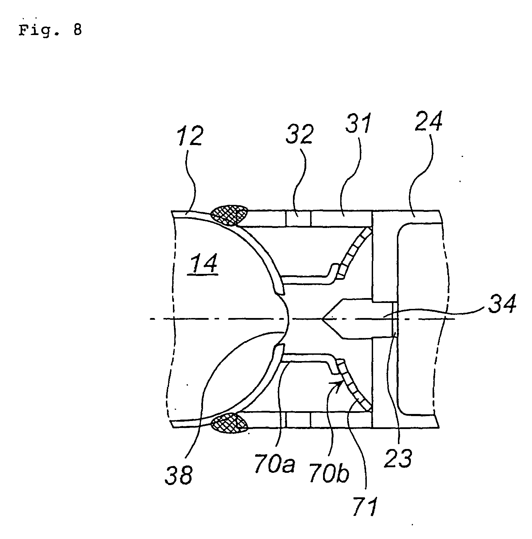

In the embodiment shown in Fig. 8, the arrowhead-like rupturing means 34 similar to that in the embodiment shown in Fig. 3 is used as the rupturing means for the first rupturing means 38, but the embodiment shown in Fig. 8 is different in a method of mounting the arrowhead-like rupturing means to the first through hole 23. The arrowhead-like rupturing means 34 shown in Fig. 8 is set such that its diameter in the base portion side is smaller than that in the arrowhead portion side, and it is fitted into the first through hole 23 from the base portion. At this time, the arrowhead-like projectile 34 may be pushed and fixed to the first through hole 23 by adjusting the diameter of the first through hole 23 and the diameter of the base portion side or it can be fixed by using an adhesive. The arrowhead-like rupturing means 34 also exhibits a moisture-proof action similar to the sealing tape 37 shown in Fig. 4. Further, in the embodiment shown in Fig. 8, a means comprising a combination of a first annular member 70a forming a guidance path, for the arrowhead-like rupturing means 34 and a gas flow path, and a second annular member 70b, having gas flow holes 71 and exhibiting a filtering function, is used instead of the annular member 70 shown in Fig. 6 and Fig. 7.

The hybrid inflator of each of the embodiments shown in Fig. 6 to Fig. 8 inflates an air bag according to a similar operation to that of the hybrid inflator 200 shown in Fig. 4. In the embodiment shown in Fig. 7, the flange-like base portion 34a of the arrowhead-like rupturing means 34 is pulled off when it is pressed by the combustion gas, and the remaining arrowhead portion is shot to collide and rupture the first rupturable plate 38.

An air bag system according to the present invention is provided with actuation-signal outputting means comprising an impact sensor and a control unit, and a module accommodating the hybrid'inflators 10, 100, 200 or 300 and an air bag in a module case. Each of the hybrid inflators 10, 100, 200 or 300 is connected to the actuation-signal outputting means (the impact sensor and the control unit) in the igniter 26 side (or in the first igniter 26 and the second igniter 46 side), and it is connected and fixed in the module case attached with the air bag by screwing a stud bolt. Then, in the air bag system having such a constitution, the inflating speed of the air bag can be adjusted by setting output conditions of the actuation signal in the actuation-signal outputting means properly to adjust an amount of a generated gas according to a magnitude of an impact.

The hybrid inflator of the present invention can be applied to various inflators including an air bag inflator for a driver side, an air bag inflator for a passenger side next to the driver, an air bag inflator for a side collision, an inflator for curtain air bag and the like.

Example

The present invention will be explained below in detail on the basis of examples, but it is not limited to these examples.

Example 1

A hybrid inflator 200 having the structure shown in Fig. 4 was manufactured. Numerical values in Fig. 4 show sizes (mm).

Liquefied $CO_2$ gas was used as the liquefied gas (the charged amount: 1.8 moles, 80 g; charging pressure: 6000kPa), a composition consisting of nitroguanidine and phase-stabilized ammonium nitrate was used as the gas generating agent (the charged amount: the total 1.8 moles comprising 0.9 moles of a cylindrical first gas generating agent and 0.9 moles of a cylindrical second gas generating agent, 43 g).

The number of moles of the liquefied gas/the number of moles of the gas generating agent was 1.00, the total weight of the hybrid inflator was 880 g (a container main body weight of 757 g + a liquefied gas weight of 80 g + a gas generating agent weight of 43 g), and the total gas generation amount (a theoretical value) was 3.6 moles.

**Claims**

1.  A hybrid inflator for an inflatable safety system of a vehicle provided with an air bag, comprising an inflator housing, one or two gas generating chambers which is combined with the inflator housing and provided with a gas generating agent, and one or two ignition means chambers provided with ignition means connected to the one or two gas generating chambers, wherein

    a liquefied gas is charged in a sealed space which is the remaining portion in the inflator housing except for the gas generating chamber and the ignition means accommodating chamber, and a molar ratio (the number of moles of the liquefied gas/the number of moles of the gas generating agent) of the liquefied gas and the gas generating agent is 0.2 to 5.

2.  A hybrid inflator according to claim 1, wherein a charged amount of the liquefied gas is 0.6 to 3 moles.

3.  A hybrid inflator according to claim 1 or 2, wherein a charged amount of the gas generating agent is 0.6 to 3 moles.

4.  A hybrid inflator according to any one of claims 1 to 3, wherein the liquefied gas is carbon dioxide.

5.  A hybrid inflator according to any one of claims 1 to 4, wherein the gas generating agent is a non-azide gas generating agent.

6.  A hybrid inflator according to claim 5, wherein the non-azide gas generating agent includes, as a fuel, one or at least two selected from the group consisting of triadine derivatives, tetrazole derivatives, triazole derivatives, guanidine derivatives, azo-dicarboxylic amide derivatives, and hydrazine derivatives.

7.  A hybrid inflator according to claim 5 or 6, wherein the non-azide gas generating agent includes, as a fuel, one or at least two selected from the group consisting of triadine derivatives, tetrazole derivatives, triazole derivatives, guanidine derivatives, azo-dicarboxylic amide derivatives, and hydrazine derivatives, and includes ammonium nitrate as an oxidizing agent.

8.  A hybrid inflator for an inflatable safety system of a vehicle provided with an air bag, comprising an inflator housing, one or two gas generating chambers which is combined with the inflator housing and provided with a gas generating agent, and one or two ignition means chambers provided with ignition means connected to the one or two gas generating chambers, wherein

    a liquefied gas is charged in a sealed space which is the remaining portion in the inflator housing except for the gas generating chamber and the ignition means accommodating chamber, and

    the gas generating agent includes, as a fuel, one or at least two selected from the group consisting of a triadine derivative, a tetrazole derivative, a triazole derivative, a guanidine derivative, an azo-dicarboxylic amide derivative, and a hydrazine derivative, and includes ammonium nitrate as an oxidizing agent.

9.  A hybrid inflator for an inflatable safety system of a vehicle provided with an air bag, comprising an inflator housing, a single gas generating chamber which is combined with the inflator housing and provided with a gas generating agent, and a single ignition means chamber provided with ignition means connected to the single gas generating chamber, wherein

    the inflator housing is formed cylindrically, and is provided at an one end side thereof with the gas generating chamber and is provided at the remaining portion thereof with a liquefied gas charged space charged with a liquefied gas, and a diffuser portion having a gas discharging port is provided between the liquefied gas charged space and the gas generating chamber,

    a path which communicates the gas generating chamber with the diffuser portion is closed in a moisture-proof state, and a path which communicates the liquefied gas charged space with the diffuser portion is closed in an air-tight state by a rupturable plate A, and

    an inflating means for an air bag comprises a liquefied gas charged in the inflator housing and a gas generated by combustion of the gas generating agent.

10. A hybrid inflator according to claim 9, wherein a molar ratio (the number of moles of the liquefied gas/the number of moles of the gas generating agent) of the liquefied gas and the gas generating agent is 0.2 to 5.

11. A hybrid inflator according to claim 9 or 10, wherein the liquefied gas and the combustion gas generated in the gas generating chamber is mixed in the diffuser portion at a time of actuation of the hybrid inflator.

**12.** A hybrid inflator for an inflatable safety system of a vehicle provided with an air bag, comprising an inflator housing, a single gas generating chamber which is combined with the inflator housing and provided with a gas generating agent, and a single ignition means chamber provided with ignition means connected to the single gas generating chamber, wherein

the inflator housing is formed cylindrically, and is provided at an one end side thereof with the gas generating chamber and is provided at the remaining portion thereof with a liquefied gas charged space charged with a liquefied gas, and a diffuser portion having a gas discharging port is provided between the liquefied gas charged space and the gas generating chamber,

an opening of a discharging path of a combustion gas generated in the gas generating chamber is positioned in the liquefied gas charged space, and the discharging path is closed by a rupturable plate A, and one or at least two paths communicating the liquefied gas charged space with the diffuser portion are closed in an air-tight state by a rupturable plate B, and

an inflating means for an air bag comprises a liquefied gas charged in the inflator housing and a gas generated by combustion of the gas generating agent.

**13.** A hybrid inflator according to claim 12, wherein a molar ratio (the number of moles of the liquefied gas/the number of moles of the gas generating agent) of the liquefied gas and the gas generating agent is 0.2 to 5.

**14.** A hybrid inflator according to claim 12 or 13, wherein the discharging path of a combustion gas generated in the gas generating chamber is formed by a cylindrical member, and an opening at one end thereof is in communication with the gas generating chamber and an opening at the other end thereof is closed by the rupturable plate A, and the opening at the other end is positioned in the liquefied gas charged space.

**15.** A hybrid inflator according to any one of claims 12 to 14, wherein the liquefied gas and the combustion gas generated in the gas generating chamber is mixed in the liquefied gas charged space at a time of actuation of the hybrid inflator.

**16.** A hybrid inflator according to any one of claims 9 to 15, wherein a rupturing means which is moved upon receipt of a pressure due to the combustion gas generated in the gas generating chamber is provided as the rupturing means for the rupturable plate A.

**17.** A hybrid inflator according to any one of claims 9 to 11, wherein the rupturing means which is moved upon receipt of a pressure due to the combustion gas generated in the gas generating chamber is provided as the rupturing means for the rupturable plate A, and the rupturing means is arranged in the diffuser portion.

**18.** A hybrid inflator according to claim 9, 10, 11 or 17, wherein the rupturing means for the rupturable plate A is pressed and supported by an annular resilient supporting member arranged in the diffuser portion, and after the rupturing means is released to rupture the rupturable plate A upon receipt of a pressure due to the combustion gas generated in the gas generating chamber, re-movement of the rupturing means is suppressed due to deformation of the resilient supporting member.

**19.** A hybrid inflator according to claim 18, wherein the annular resilient supporting member has a gas flow hole, which functions as a filter.

**20.** A hybrid inflator according to any one of claims 9 to 16, wherein the rupturing means for the rupturable plate A is arranged in a path which communicates the diffuser portion with the gas generating chamber or a discharging path of the combustion gas which communicates the gas generating chamber with the liquefied gas charged space, and the rupturing means is moved upon receipt of a pressure due to the combustion gas generated in the gas generating chamber.

**21.** A hybrid inflator according to claim 9, 10, 11 or 12, wherein the rupturing means which is moved upon receipt of a pressure due to the combustion gas generated in the gas generating chamber is provided as the rupturing means for the rupturable plate A, the rupturing means is arranged in a path which communicates the diffuser portion with the gas generating chamber and exhibits a moisture-proof action before it is moved.

**22.** A hybrid inflator according to any one of claims 16 to 21, wherein the rupturing means for the rupturable plate A is ball-like or arrowhead-like.

**23.** A hybrid inflator for an inflatable safety system of a vehicle provided with an air bag, comprising an inflator housing, two gas generating chambers which are combined with the inflator housing and provided with a gas generating agent, and two ignition means chambers provided with ignition means connected to the two gas generating chambers, wherein

the inflator housing is formed cylindrically, and is provided at an one end side thereof with a first gas generating chamber and at the other end side with a second gas generating chamber, and is provided at the remaining portion thereof with a liquefied gas charged space charged with a liquefied gas, and a diffuser portion having a gas discharging port is provided between the liquefied gas charged space and the first gas generating chamber,

a path which communicates the first gas generating chamber with the diffuser portion is closed in a moisture-proof state, and a path which communicates the liquefied gas charged space with the diffuser portion is closed in an air-tight state by a first rupturable plate, and a path which communicates the liquefied gas charged space with the second gas generating chamber is closed in an air-tight state by a second rupturable plate, and

an inflating means for an air bag comprises a liquefied gas charged in the inflator housing and a gas generated by combustion of the gas generating agent.

**24.** A hybrid inflator according to claim 23, wherein a molar ratio (the number of moles of the liquefied gas/the number of moles of the gas generating agent) of the liquefied gas and the gas generating agent is 0.2 to 5.

**25.** A hybrid inflator according to claim 23 or 24, wherein the liquefied gas and the combustion gas generated in the first gas generating chamber is mixed in the diffuser portion at a time of actuation of the hybrid inflator.

**26.** A hybrid inflator for an inflatable safety system of a vehicle provided with an air bag, comprising an inflator housing, two gas generating chambers which are combined with the inflator housing and provided with a gas generating agent, and two ignition means chambers provided with ignition means connected to the two gas generating chambers, wherein

the inflator housing is formed cylindrically, and is provided at an one end side thereof with a first gas generating chamber and at the other end side with a second gas generating chamber, and is provided at the remaining portion thereof with a liquefied gas charged space charged with a liquefied gas, and a diffuser portion having a gas discharging port is provided between the liquefied gas charged space and the first gas generating chamber,

an opening of a discharging path of a combustion gas generated in the first gas generating chamber is positioned in the liquefied gas charged space, the discharging path is closed by a first rupturable plate, a path which communicates the liquefied gas charged space with the second gas generating chamber is closed in an air-tight state by a second rupturable plate, and one or at least two paths which communicate the liquefied gas charged space with the diffuser portion are further closed in an air-tight state by a third rupturable plate, and

an inflating means for an air bag comprises a liquefied gas charged in the inflator housing and a gas generated by combustion of the gas generating agent.

**27.** A hybrid inflator according to claim 26, wherein a molar ratio (the number of moles of the liquefied gas/the number of moles of the gas generating agent) of the liquefied gas and the gas generating agent is 0.2 to 5.

**28.** A hybrid inflator according to claim 27, wherein the discharging path of a combustion gas generated in the first gas generating chamber is formed by a cylindrical member, and an opening at one end thereof is in communication with the first gas generating chamber and an opening at the other end thereof is closed by the first rupturable plate, and the opening at the other end is positioned in the liquefied gas charged space.

**29.** A hybrid inflator according to claims 27 to 28, wherein the liquefied gas and the combustion gas generated in the gas generating chamber is mixed in the liquified gas charged space at a time of actuation of the hybrid inflator.

**30.** A hybrid inflator according to any one of claims 23 to 29, wherein the combustion gas generated in the first gas generating chamber flows into the diffuser portion or flows into the diffuser portion via the liquefied gas charged space and the combustion gas is discharged from a gas discharging port, and the combustion gas generated in the second gas generating chamber flows into the diffuser portion via the liquefied gas charged space to be discharged from the gas discharging port.

**31.** A hybrid inflator according to any one of claims 23 to 30, wherein the rupturing means which is moved upon receipt of a pressure due to the combustion gas generated in the first gas generating chamber is provided as the rupturing means for the first rupturable plate.

**32.** A hybrid inflator according to claim 23, 24, 25 or 30, wherein the rupturing means which is moved upon receipt of a pressure due to the combustion gas generated in the first gas generating chamber is provided as the rupturing means for the first rupturable plate, and the rupturing means is arranged in the diffuser portion.

**33.** A hybrid inflator according to claim 23, 24, 25, 30 or 32, wherein the rupturing means for the first rupturable plate is pressed and supported by an annular resilient supporting member arranged in the diffuser portion, and after the rupturing means is released to rupture the first rupturable plate upon receipt of a pressure due to the combustion gas generated in the first gas generating chamber, re-movement of the rupturing means is suppressed due to deformation of the resilient supporting member.

**34.** A hybrid inflator according to claim 33, wherein the annular resilient supporting member has a gas flow hole, which functions as a filter.

**35.** A hybrid inflator according to any one of claims 23 to 31, wherein the rupturing means for the first rupturable plate is arranged in a path which communicates the diffuser portion with the gas first generating chamber or a discharging path of the combustion gas which communicates the first gas generating chamber with the liquefied gas charged space, and the rupturing means is moved upon receipt of a pressure due to the combustion gas generated in the first gas generating chamber.

**36.** A hybrid inflator according to claim 26,27,28,30,or 32, wherein the rupturing means which is moved upon receipt of a pressure due to the combustion gas generated in the first gas generating chamber is provided as the rupturing means for the first rupturable plate, the rupturing means is arranged in a path which communicates the diffuser portion with the first gas generating chamber and exhibits a moisture-proof action before it is moved.

**37.** A hybrid inflator according to any one of claims 31 to 36, wherein the rupturing means for the first rupturable plate is ball-like or arrowhead-like.

**38.** A hybrid inflator according to any one of claims 23 to 37, wherein a charging hole for the liquefied gas is provided in the second gas generating chamber side.

**39.** A hybrid inflator according to any one of claims 8 to 38, wherein the liquefied gas is carbon dioxide.

**40.** A hybrid inflator according to any one of claims 9 to 38, wherein the gas generating agent is a non-azide gas generating agent.

**41.** A hybrid inflator according to claim 40, wherein the non-azide gas generating agent includes, as a fuel, one or at least two selected from the group consisting of triadine derivatives, tetrazole derivatives, triazole derivatives, guanidine derivatives, azo-dicarboxylic amide derivatives, and hydrazine derivatives.

**42.** A hybrid inflator according to claim 40, wherein the non-azide gas generating agent includes, as a fuel, one or at least two selected from the group consisting of triadine derivatives, tetrazole derivatives, triazole derivatives, guanidine derivatives, azo-dicarboxylic amide derivatives, and hydrazine derivatives, and includes ammonium nitrate as an oxidizing agent.

**43.** A hybrid inflator according to any one of claims 9 to 42, wherein a charged amount of the liquefied gas is 0.6 to 3 moles.

**44.** A hybrid inflator according to any one of claims 9 to 43, wherein a charged amount of the gas generating agent is 0.6 to 3 moles.

**45.** An air bag system comprising an actuation-signal outputting means including an impact sensor and a control unit, and a module case accommodating a hybrid inflator according to any one of claims 1 to 44 and an air bag in a case.

Fig. 1

Fig. 2

Fig. 3

Fig. 4

EP 1 477 374 A1

Fig. 5

23

Fig. 6

Fig. 7

Fig. 8

## INTERNATIONAL SEARCH REPORT

| | International application No. |
|---|---|
| | PCT/JP03/01122 |

**A. CLASSIFICATION OF SUBJECT MATTER**
Int.Cl⁷ B60R21/26

According to International Patent Classification (IPC) or to both national classification and IPC

**B. FIELDS SEARCHED**

Minimum documentation searched (classification system followed by classification symbols)
Int.Cl⁷ B60R21/16-21/32, B60R22/46

Documentation searched other than minimum documentation to the extent that such documents are included in the fields searched
Jitsuyo Shinan Koho         1926–1996    Toroku Jitsuyo Shinan Koho    1994–2003
Kokai Jitsuyo Shinan Koho   1971–2003    Jitsuyo Shinan Toroku Koho    1996–2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br><br>A | EP 539872 A1  (Dynamit Nobel AG.),<br>05 May, 1993 (05.05.93),<br>Full text<br>& DE 4135547 A1      & US 5330730 A<br>& US 5415845 A      & JP 7-186871 A | 1–3<br>4–17,20–22,<br>39–45<br>18–19,23–38 |
| Y | JP 61-266384 A  (Mitsubishi Heavy Industries,<br>Ltd.),<br>26 November, 1986 (26.11.86),<br>Page 2, upper right column, lines 18 to 19<br>(Family: none) | 4,39 |
| Y | WO 01/72666 A1  (Daicel Chemical Industries,<br>Ltd.),<br>04 October, 2001 (04.10.01),<br>Full text<br>& JP 2001-342091 A | 5–8,39–42 |

☒ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>17 March, 2003 (17.03.03) | Date of mailing of the international search report<br>01 April, 2003 (01.04.03) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.

PCT/JP03/01122

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 10-278724 A  (Matsushita Electric Industrial Co., Ltd.), 20 October, 1998 (20.10.98), Page 10, left column, line 2 to page 11, left column, line 42; Fig. 8 (Family: none) | 9-11,16-17, 20-22,40-45 |
| Y | JP 49-120335 A  (Toyota Motor Co., Ltd.), 18 November, 1974 (18.11.74), Full text (Family: none) | 12-16 |
| Y | JP 2000-118347 A  (Toyoda Gosei Co., Ltd.), 25 April, 2000 (25.04.00), Full text (Family: none) | 45 |

Form PCT/ISA/210 (continuation of second sheet) (July 1998)